# EUROPÄISCHE PATENTSCHRIFT

(11) **EP 2 587 075 B1**
(45) Veröffentlichungstag und Bekanntmachung des Hinweises auf die Patenterteilung: **28.03.2018**
(21) Anmeldenummer: 12190408.0
(22) Anmeldetag: 29.10.2012
(51) Int. Cl.: F16B 12/10, F16B 7/04, F16B 12/40

(54) **Rohrverbinder**
Pipe connector
Raccordement de tuyau

(30) Priorität: 28.10.2011 DE 202011107301 U
(43) Veröffentlichungstag der Anmeldung: 01.05.2013
(73) Patentinhaber: Versee GmbH, 27318 Hoya (DE)
(72) Erfinder: Kollwitz, Jens, 27318 Hoya (DE)
(74) Vertreter: Eisenführ Speiser

(56) Entgegenhaltungen:
- EP-A- 0 344 120
- WO-A1-2009/072219
- DE-A1- 2 704 199
- US-A- 3 532 369

## Beschreibung

Die vorliegende Erfindung betrifft einen Rohrverbinder zum Verbinden von Möbelrohren, ein Möbelrohr zur Herstellung eines Rahmengerüstes eines Möbels, einen Rohrverbindersatz sowie ein Möbel. Zudem betrifft die Erfindung ein Verfahren zum Herstellen einer Verbindung von wenigstens einem Möbelrohr mit einem Rohrverbinder und/oder eines Rohrverbindersatzes sowie ein Verfahren zum Trennen eines Möbelrohres von einem Rohrverbinder und/oder eines Rohrverbindersatzes.

Rohrverbinder für Möbel sind allgemein bekannt. Solche Rohrverbinder werden zur Herstellung eines Rahmengerüstes eines Möbels wie beispielsweise eines Regals oder Schrankes verwendet. Dabei werden die Möbelrohre oftmals mit einem Verbindungselement dazwischen verschraubt oder auf sonstige Weise aufwendig miteinander verbunden. Dabei wird teilweise ein Werkzeug zum Herstellen der Verbindung benötigt. Nachteilig hierbei ist, dass die Montage eines solchen Möbels zeitintensiv und teilweise nur unter Verwendung eines entsprechenden Werkzeuges möglich ist. Aus der US 3,532,369 A1 ist einen Rohrverbinder mit den Merkmalen des Oberbegriffs des Anspruchs 1 bekannt. Der Erfindung liegt somit die Aufgabe zugrunde, wenigstens eines der oben genannten Probleme zu beheben oder zu verringern, insbesondere soll das Verbinden von Möbelrohren verbessert, insbesondere erleichtert werden. Zumindest soll eine alternative Lösung vorgeschlagen werden.

Erfindungsgemäß wird ein Rohrverbinder zum Verbinden von Möbelrohren gemäß Anspruch 1 vorgeschlagen. Der Rohrverbinder umfasst eine Knotenbasis, welche zwischen den Möbelrohren anzuordnen ist und wenigstens einen mit der Knotenbasis fest verbundenen Verbindungsstumpf, der zum Aufstecken eines Rohrabschnittes von jeweils einem der Möbelrohre darauf vorbereitet ist. Dabei weist jeder der Verbindungsstümpfe wenigstens ein Rastelement zum Herstellen einer verrasteten Verbindung mit einem Gegenelement des jeweiligen Rohrabschnittes auf. Das Rastelement ist in eine Position zum Verrasten elastisch vorgespannt. Dabei weist jeder Rohrabschnitt wenigstens ein sich nach innen
erstreckendes Gegenelement zum Verrasten mit dem Rastelement auf, gekennzeichnet dadurch, dass das Rastelement drehbar um eine Drehachse angeordnet ist und/oder wenigstens ein Federelement zum Erzeugen der Vorspannung an dem Rastelement angeordnet ist und/oder wenigstens ein Federelement zum Erzeugen der Vorspannung an dem Rastelement vorgesehen ist. Unter einer Knotenbasis wird hier ein Element verstanden, welches zwischen den Möbelrohren angeordnet ist, also die Möbelrohre so miteinander verbindet, dass sich die Knotenbasis von einem ersten Möbelrohrende eines ersten Möbelrohres bis zu einem zweiten Möbelrohrende eines zweiten Möbelrohres erstreckt. Dabei ist eine Knotenbasis beispielsweise würfelförmig oder kugelförmig ausgebildet und beispielsweise durch ein thermisches Spritzverfahren, insbesondere ein Zinkspritzverfahren, korrosionsbeständig gemacht. Von der Knotenbasis geht in jeder Richtung ein Verbindungsstumpf ab, in der das Möbelrohr anzuordnen ist. Der jeweilige Verbindungsstumpf ist dabei an die Form des Möbelrohres so angepasst, dass das Möbelrohr mit einem Rohrabschnitt auf den Verbindungsstumpf aufgesteckt wird. Weist der Rohrabschnitt beispielsweise einen in Etwa runden Querschnitt auf, weist auch der Verbindungsstumpf einen runden Querschnitt auf, wobei der Querschnitt des Verbindungsstumpfes kleiner als der Querschnitt des Rohrabschnittes ist. Beim Aufstecken des Rohrabschnittes bedeckt der Rohrabschnitt den Verbindungsstumpf und stößt insbesondere an einen Anschlag, z.B. eine ebene Fläche der Knotenbasis an. Dadurch, dass sich das Gegenelement nach innen erstreckt, wird es beim Aufstecken des Möbelrohres auf den Verbindungsstumpf in den Verbindungsstumpf an einer Seite eingeführt. Dabei ist der Verbindungsstumpf beispielsweise in Form eines Hohlzylinders ausgebildet, der im Hohlraum ein Rastelement zum Herstellen der Verbindung mit dem Rohrabschnitt aufweist.

Das Rastelement weist vorzugsweise einen Rastabschnitt zum Halten des Gegenelementes in einer Rastposition auf. Dabei ist der Rastabschnitt zum Verhindern einer Bewegung des Gegenelementes wenigstens in einer der Einschubrichtung des Rohrabschnitts entgegengesetzten Richtung vorbereitet, so dass das Gegenelement in der verrasteten Position nicht aus dem Rastabschnitt heraus bewegt wird. Der Rastabschnitt ist beispielsweise in Form einer Vertiefung oder Hinterschneidung ausgebildet. Das Möbelrohr wird somit in seiner aufgesteckten Position auf den Verbindungsstumpf und damit an der Knotenbasis gehalten. Das Möbelrohr braucht hierfür nur aufgesteckt zu werden.

Vorzugsweise ist das Rastelement drehbar um eine Drehachse angeordnet und/oder es ist wenigstens ein Federelement zum Erzeugen der Vorspannung vorgesehen. Solch ein Federelement ist vorzugsweise ein Federblech, welches beispielsweise aus einem Federstahl gefertigt ist. Zum Bewegen, insbesondere zum Drehen, Schwenken oder Wippen des Rastelementes um eine Drehachse ist die Vorspannung des das Rastelement beaufschlagenden Federelementes zu überwinden. Durch die Bewegung des Rastelementes wird entweder das Gegenelement des Rohrabschnitts zum Herstellen der Verbindung in den Rastabschnitt eingerastet oder zum Trennen der Verbindung aus der Verrastung gelöst.

In einer weiteren Ausführungsform weist der Verbindungsstumpf eine Aussparung auf, die zum Einführen des Gegenelementes beim Aufstecken des Rohrabschnittes auf den Verbindungsstumpf vorbereitet ist, so dass das Gegenelement durch die Aussparung in den Verbindungsstumpf in einer zur Längsachse axialen Einschubrichtung geführt wird. Dabei ist die Aussparung in Etwa der Größe und der Form des Gegenelementes angepasst, so dass dieses bis zum Rastabschnitt des Rastelementes geführt wird. Beispielsweise ist die Aussparung in Form eines Schlitzes oder einer Einbuchtung ausgeführt. Um das Einführen des Gegenelementes zu dem Rastabschnitt zu erleichtern, kann die Aussparung beispielsweise in dem Bereich, in dem das Gegenelement eingeführt wird, breiter als in dem Bereich, in dem das Gegenelement mit dem Rastelement verrastet.

In einer bevorzugten Ausführungsform weist der Rohrverbinder wenigstens zwei, vorzugsweise drei, vier, fünf oder sechs Verbindungsstümpfe auf. Dabei sind jeweils wenigstens zwei der Verbindungsstümpfe in einem Winkel von 45° bis 180°, vorzugsweise 90°, zueinander angeordnet, um jeweils zwei Möbelrohre miteinander zu verbinden.

Bei einem Regal werden beispielsweise für einen Eckbereich ein Rohrverbinder mit einer Knotenbasis und drei von dem Knotenbereich abgehende Verbindungsstümpfe verwendet. Dabei sind die Verbindungsstümpfe in einem Winkel von 90° zueinander angeordnet. In einem mittleren Bereich des Regals wird beispielsweise ein Rohrverbinder mit einer Knotenbasis mit fünf Verbindungsstümpfen verwendet, so dass dementsprechend fünf Möbelrohre aufgesteckt werden können.

Vorzugweise weist der Rohrverbinder eine Öffnung auf zum Einführen eines Werkzeuges zum Drücken des Rastelementes gegen seine Vorspannung, insbesondere zum Schwenken um eine bzw. die Drehachse des Rastelementes.

Ein solches Werkzeug ist dabei beispielsweise ähnlich eines dünnen und/oder spitzen Schraubendrehers ausgebildet. Die Spitze drückt bestimmungsgemäß so auf das Rastelement, dass durch die resultierende Bewegung des Rastelementes eine Verbindung zwischen Rastelement und Gegenelement gelöst werden kann.

In einer weiteren Ausführungsform ist das Rastelement in dem Rohrabschnitt und das Gegenelement in dem Verbindungsstumpf angeordnet. Dabei weist der Rohrabschnitt beispielsweise einen Schlitz oder zwei nach innen, insbesondere radial nach innen erstreckende Schenkel auf, die gemeinsam einen Rastabschnitt zum Aufnehmen eines Gegenelementes bilden. Das Gegenelement des Verbindungsstumpfes ist beispielsweise als ein flexibler Haken oder eine Rastnase ausgebildet.

Zudem wird erfindungsgemäß ein Rohrverbindersatz vorgeschlagen. Der Rohrverbindersatz umfasst einen Rohrverbinder gemäß einer der obigen Ausführungen und einen Rohrabschnitt zum Aufstecken von jeweils einem der Möbelrohre auf den Rohrverbinder. Dabei weist jeder Rohrabschnitt wenigstens ein sich nach innen, insbesondere radial nach innen erstreckendes Gegenelement zum Verrasten mit dem Rastelement auf. Das nach innen erstreckende Gegenelement ist vorbereitet zum Verrasten mit einem Rastelement, welches im Inneren des Möbelrohres angeordnet ist.

Gemäß einer Ausführungsform ist ein Rohrverbindersatz dadurch gekennzeichnet, dass das Gegenelement als Strebe oder Stift ausgebildet ist und vollständig durch den Rohrabschnitt (530), insbesondere quer zu einer Längsachse (16) des Rohrabschnitts (530), hindurch ragt, insbesondere dass das Gegenelement an zwei Seiten des Rohrabschnitts in diesen eingesetzt ist, dass das Gegenelement durch den Rohrabschnitt als Durchmesser hindurch ragt und/oder dass das Gegenelement im zusammengesetzten Zustand der Knotenbasis mit dem Rohrabschnitt parallel zur Drehachse (6) des Rastelementes angeordnet ist.

Die durch den Rohrabschnitt hindurch ragende Strebe bzw. der durch den Rohrabschnitt hindurch ragende Stift wird zur Erleichterung der Herstellung des Rohrabschnittes vorgeschlagen. Es kann dazu in dem Rohrabschnitt ein Loch bzw. eine Bohrung vorgesehen sein durch die eine solche Strebe oder Stift insbesondere von außen eingesetzt wird. Ein so vorbereiteter Rohrabschnitt kann dann in ein Möbelrohr fest eingesetzt werden, damit dann das Möbelrohr mit einem Verbindungsknoten und dadurch mit weiteren Möbelrohren verbunden werden kann.

Wenn das Gegenelement, nämlich Strebe oder Stift, den Rohrabschnitt vollständig durchquert, ist eine besonders stabile Ausführung dadurch erreichbar, dass das Gegenelement an zwei Seiten des Rohrabschnitts eingesetzt und dadurch insbesondere dort fest verankert ist. Diese zwei Seiten sind sich somit im Wesentlichen gegenüberliegend angeordnet, wobei beide Seiten Teil desselben Rohrmantels bzw. Zylindermantels des Rohrabschnitts bilden können.

Vorzugsweise bildet die Strebe bzw. der Stift einen Durchmesser des Rohrabschnittes. Die Strebe bzw. der Stift reichen dann quer durch den Rohrabschnitt hindurch und schneiden die Längsachse des Rohrabschnitts. Durch eine Ausgestaltung, bei der die Strebe bzw. der Stift bestimmungsgemäß parallel zur Drehachse des Rastelementes ausgebildet ist, wird erreicht, dass das Rastelement quer zur Strebe bzw. zum Stift schwenkt, insbesondere nicht schräg dazu schwenkt.

Zudem wird erfindungsgemäß ein Möbelrohr zur Herstellung eines Rahmengerüstes eines Möbels vorgeschlagen. Dabei umfasst das Möbelrohr wenigstens einen Rohrabschnitt, welcher wenigstens ein nach innen, insbesondere radial nach innen erstreckendes Gegenelement zum Verrasten mit dem Rastelement aufweist, wobei der Rohrabschnitt vorbereitet ist zum Verbinden mit einem Rohrverbinder gemäß wenigstens einer der obigen Ausführungen.

Vorzugsweise weist das Möbelrohr ein Außenrohr auf, in das der wenigstens eine Rohrabschnitt als Innenrohr eingesetzt ist. Ein solches Innenrohr ist dabei beispielsweise in ein Außenrohr eingepresst oder wird mit dem Außenrohr verklebt. Dies hat den Vorteil, dass das Außenrohr in unterschiedlichen Ausführungsformen bezüglich Material oder Farbe ausgeführt sein kann. Um das Möbelrohr zum Verbinden mit einem Rohrverbinder zu verwenden braucht es nur auf das genannte Innenrohr gesteckt werden, bzw. das Innenrohr braucht nur in das Möbelrohr bzw. Außenrohr eingesteckt und befestigt zu werden.

In einer weiteren Ausführungsform ist das Gegenelement als ein aus dem Innenrohr, teilweise ausgestanzter und umgebogener Schenkel ausgebildet. Dadurch wird eine einfache und kostengünstige Fertigung des Innenrohres zusammen mit dem Gegenelement möglich.

Zudem wird erfindungsgemäß ein Möbel bzw. Möbelstück vorgeschlagen. Das Möbel umfasst wenigstens zwei Möbelrohre, insbesondere nach einer der obigen Ausführungsformen und wenigstens einen Rohrverbinder nach obiger Ausführungsform und/oder einen Rohrverbindersatz nach obiger Ausführungsform. Dabei sind die wenigstens zwei Möbelrohre mit und mittels dem wenigstens einen Rohrverbinder verbunden.

Ein solches Möbel entspricht beispielsweise einem Regal oder einem Büromöbel mit Regalelementen und/oder Schubladenfächern. Dabei werden mehrere Möbelrohre wie beispielsweise zwölf, zwanzig, achtundzwanzig und mehr verwendet. Die einzelnen Möbelrohre sind dabei beispielsweise über acht, zwölf, sechzehn oder mehr Rohrverbinder bzw. Rohrverbindersätze miteinander verbunden.

Vorzugsweise ist in dem Außenrohr, dem Innenrohr und dem Verbindungsstumpf jeweils eine Öffnung zum Einführen eines Werkzeuges zum Drücken des Rastelementes gegen seine Vorspannung, insbesondere zum Schwenken um eine bzw. seine Drehachse, angeordnet. Dabei sind die jeweiligen Aussparungen fluchtend zueinander angeordnet.

Um eine hergestellte Verbindung zu lösen, wird ein Werkzeug bis zu dem innerhalb der Rohre liegenden Rastelement so eingeführt, dass das Werkzeug gegen das Rastelement drückt und somit eine Bewegung des Rastelementes erzeugt, durch die das Gegenelement aus dem Rastelement gelöst werden kann. Dabei sind die Öffnungen wenigstens so groß, dass das Außenrohr und das Innenrohr soweit entgegen der Einschubrichtung bewegt werden können, bis das Gegenelement aus dem Rastabschnitt entfernt ist.

Zudem wird erfindungsgemäß ein Verfahren zum Herstellen einer Verbindung wenigstens zweier Möbelrohre nach obiger Ausführung mit einem Rohrverbinder nach obiger Ausführung und/oder eines Rohrverbindersatzes nach obiger Ausführung vorgeschlagen. Das Verfahren umfasst den Schritt des Aufsteckens des Rohrabschnittes auf den Verbindungsstumpf, so dass das Gegenelement mit dem Rastelement so ineinandergreift, dass eine verrastete Verbindung entsteht.

Dabei drückt das Gegenelement beim Aufstecken des Möbelrohres so auf das Rastelement, dass dieses um seine bzw. eine Drehachse bewegt, insbesondere geschwenkt wird. Bei dieser Bewegung wird das Gegenelement weiter zu einem Rastabschnitt geführt. In dem Rastabschnitt drückt das Gegenelement nicht mehr gegen das Rastelement, so dass sich dieses selbsttätig in seine Ausgangsposition zurückbewegt, insbesondere zurückwippt. Das Gegenelement liegt so in dem Rastabschnitt, dass eine Bewegung des Gegenelementes in einer der Einschubrichtung entgegengesetzten Richtung verhindert wird. Vorzugsweise ist die dadurch entstandene Verbindung lösbar.

Vorzugsweise wird die Verbindung bei dem Verfahren zwischen dem Rohrabschnitt und dem Verbindungsstumpf werkzeuglos hergestellt. Hierbei wird unter werkzeuglos verstanden, dass zur Montage nur der Verbindungsstumpf und das Möbelrohr notwendig sind. Das Aufstecken des Möbelrohrs erfolgt beispielsweise nur mit der Hand, da keine große Kraftanstrengung zum Herstellen der Verbindung erforderlich ist.

Zudem wird erfindungsgemäß ein Verfahren zum Trennen einer Verbindung wenigstens zweier Möbelrohre nach wenigstens einer der obigen Ausführungen vorgeschlagen, wobei die Möbelrohre mit einem Rohrverbinder nach obigen Ausführungen verbunden sind und/oder es wird ein Verfahren zum Trennen eines Rohrverbindersatzes vorgeschlagen. Das Verfahren umfasst den Schritt des Einführens eines Werkzeuges in die Öffnungen des Außenrohres, des Innenrohres und des Verbindungsstumpfes, so dass das Rastelement gegen seine Vorspannung um eine bzw. seine Drehachse gedrückt, insbesondere geschwenkt wird.

Vorteilhaft bei der Verwendung eines Werkzeuges zum Trennen der Verbindung ist, dass die Verbindung nicht unabsichtlich von Hand gelöst werden kann.

Nachfolgend wird die Erfindung exemplarisch anhand von Ausführungsbeispielen unter Bezugnahme auf die begleitenden Figuren erläutert.
- Figur 1: zeigt ein Ausführungsbeispiel eines Rohrverbinders in einer perspektivischen Ansicht.
- Figur 1a: zeigt den Rohrverbinder aus Figur 1 in einer axialen Ansicht.
- Figur 1b: zeigt den Rohrverbinder aus Figur 1 in einer Schnittansicht.
- Figur 2: zeigt ein Ausführungsbeispiel eines Möbelrohres in einer perspektivischen Ansicht.
- Figur 2a: zeigt das Möbelrohr aus Figur 2 in einer axialen Ansicht.
- Figur 2b: zeigt das Möbelrohr aus Figur 2 in einer Schnittansicht.
- Figur 3: zeigt den Rohrverbinder aus Figur 1 mit Innenrohr und Außenrohr in einer Schnittansicht.
- Figur 4: zeigt ein weiteres Ausführungsbeispiel eines Rohrverbinders mit zweimal einem Innen- und einem Außenrohr in einer perspektivischen Ansicht.
- Figur 4a: zeigt den Rohrverbinder aus Figur 4 in einer Schnittansicht.
- Figur 5a: zeigt einen Rohrverbindersatz einer weiteren Ausführungsform in einer zusammengesetzten Position.
- Figur 5b: zeigt den Rohrverbindersatz der Figur 5a in einer Zwischenposition zwischen der zusammengesetzten Position und einer getrennten Position.
- Figur 5c: zeigt den Rohrverbindersatz der Figuren 5a und 5b in der getrennten Position.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente können unterschiedlich skaliert sein.

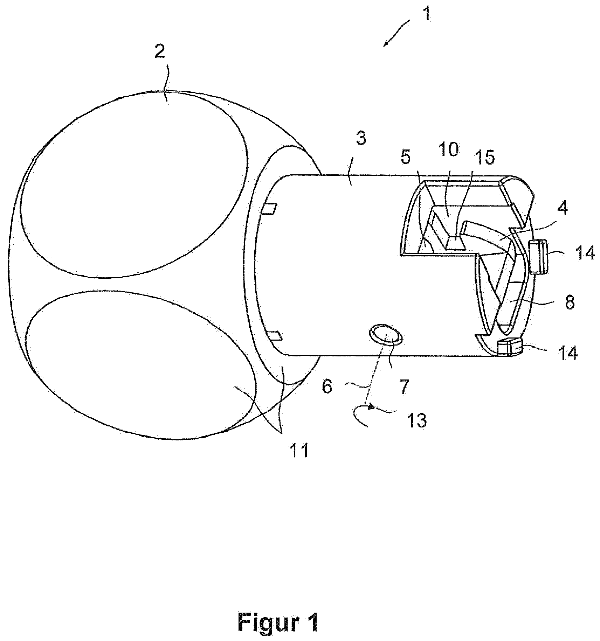

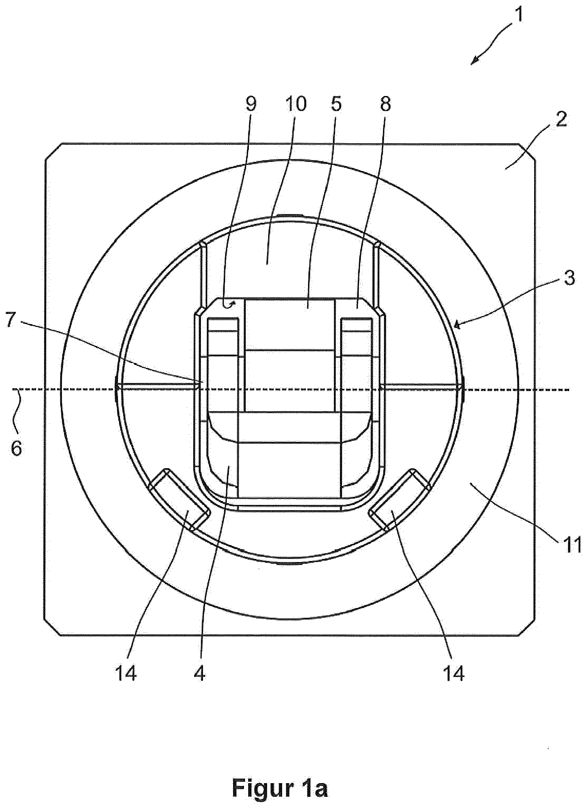

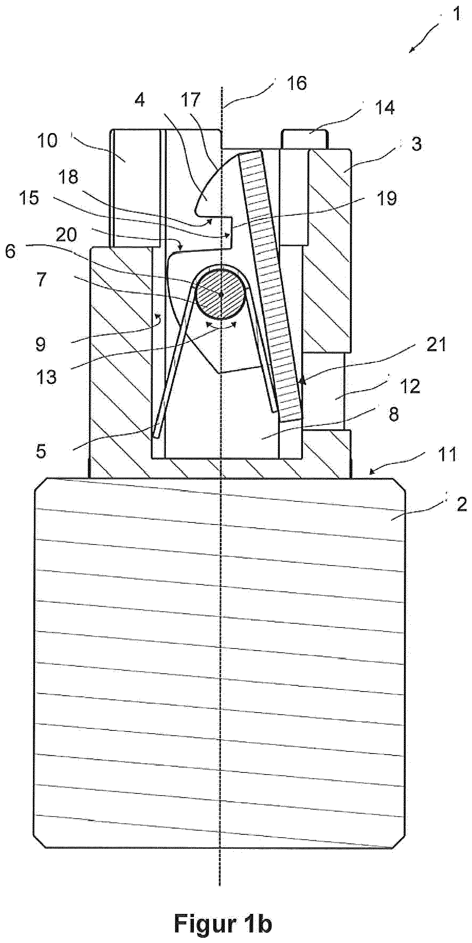

Figur 1 zeigt einen Rohrverbinder 1. Dabei weist der Rohrverbinder 1 eine Knotenbasis 2 auf, welche mit einem Verbindungsstumpf 3 fest verbunden ist. Die Knotenbasis 2 ist würfelförmig mit abgerundeten Ecken ausgebildet. Es sind drei ebene, kreisrunde Flächen 11 zu erkennen, die rechtwinklig zueinander stehen. Die Kanten sind abgerundet bzw. abgeschrägt. Von einer der ebenen Flächen 11 erstreckt sich der dargestellte Verbindungsstumpf 3. Dabei weist der Verbindungsstumpf 3 einen Hohlraum 8 auf, in dem ein Rastelement 4 und ein Federelement 5 um einen Bolzen 7 drehbar angeordnet sind. Das Rastelement 4 weist einen Rastabschnitt 15 auf. Der Rastabschnitt 15 ist als eine Vertiefung in dem Rastelement 4 angeordnet.

Das Rastelement 4 ist so um den Bolzen 7 angeordnet, dass es in Drehrichtung 13 und entgegen der Drehrichtung 13 um die Drehachse 6 bewegt werden kann.

Weiterhin weist der Verbindungsstumpf 3 eine Aussparung 10 zum Einführen eines Gegenelementes sowie zwei Erhebungen 14 auf, die zur drehsteifen Festsetzung einer Verbindung mit einem Rohrabschnitt verwendet werden, so dass sich der Verbindungsstumpf und das Innenrohr nicht gegeneinander verdrehen.

Figur 1a zeigt den Rohrverbinder 1 aus Figur 1 in einer axialen Ansicht. Das Rastelement 4 und das Federelement 5 sind in dem Hohlraum 8 um den Bolzen 7 angeordnet. Dabei weist der Hohlraum 8 eine Innenwand 9 auf, gegen die das Federelement 5 anschlägt.

Figur 1b zeigt den Rohrverbinder aus Figur 1 in einer Schnittansicht. Das Rastelement 4, der Bolzen 7 sowie das Federelement 5 sind im Hohlraum 8 des Verbindungsstumpfs 3 angeordnet. Das Federelement 5 ist zwischen der Innenwand 9 des Hohlraumes 8 und dem Rastelement 4 eingespannt. Dadurch wird das Rastelement 4 mit einer Vorspannung beaufschlagt. Das Rastelement 4 ist um den Bolzen 7 drehbar gelagert, sodass eine Drehbewegung in und entgegen der Drehrichtung 13 um die Drehachse 6 möglich ist. Wird auf das Rastelement 4 Druck ausgeübt, beispielsweise in dem ein Werkzeug durch die Öffnung 12 geführt wird und gegen das Rastelement 4 stößt, bewegt sich das Rastelement 4 in Drehrichtung 13 um die Drehachse 6 und das Federelement 5 wird zusammengedrückt. Lässt der Druck auf das Rastelement 4 nach, entspannt sich das Federelement 5 und das Rastelement 4 bewegt sich dadurch gegen die Drehrichtung 13.

Das Rastelement 4 weist in Höhe der Aussparung 10 eine abgerundete Fläche 17 auf, welche zu dem Rastabschnitt 15 führt. Der Rastabschnitt 15 ist in Form einer Vertiefung in dem Rastelement 4 ausgebildet. Die Vertiefung weist zwei zueinander etwa parallele Seitenwände 18 und 20 sowie eine zu den Seitenwänden 18 und 20 etwa senkrecht stehende Bodenwand 19 auf. Die erste Seitenwand 18 ist niedriger als die zweite Seitenwand 20. Dadurch kann, wenn sich in dem Rastabschnitt 15 ein zu verrastendes Gegenelement befindet, dieses Gegenelement nicht aus dem Rastabschnitt 15 ohne eine Bewegung des Rastelementes 4 aus dem Rastabschnitt 15 heraus gelöst werden. Wird das Rastelement 4 in Drehrichtung 13 um die Drehachse 6 bewegt so kann das Gegenelement nur über die niedrigere Seitenwand 18 wieder aus dem Rastabschnitt 15 entfernt werden.

Weiterhin ist in Figur 1b eine Öffnung 12 zu erkennen. Bei Verrastung mit einem Rohrabschnitt befindet sich in dem Rastabschnitt 15 ein Gegenelement. Um die Verbindung zu lösen, wird insbesondere mit einem Werkzeug durch die Öffnung 12 in den Hohlraum 8 so eingegriffen, dass das Rastelement 4 soweit in Drehrichtung 13 um die Drehachse 6 gedreht wird, dass das Gegenelement aus dem Rastabschnitt 15 entfernt werden kann, weil die erste Seitenwand entsprechend weit abgesenkt wurde.

Vorteilhaft ist hierbei, dass mit einem Werkzeug, beispielsweise einem Schraubenzieher, gegen einen Druckpunkt 21 gedrückt wird. Hierdurch führt das Rastelement 4 eine Drehbewegung um die Drehachse 6 aus, so dass sich der Rastabschnitt 15 und insbesondere die erste Seitenwand 18 etwa in eine Richtung bewegt, die der Bewegungsrichtung des drückenden Werkzeugs und damit der Bewegungsrichtung des Druckpunktes 21 entgegen gerichtet ist. Somit wird zum Lösen auf das Rastmittel 4 gedrückt, was zum Lösen zu einer zurückziehenden Bewegung des Rastabschnitts 15 führt. Es wird daher, nicht nur für die gezeigte Ausführungsform, als vorteilhaft vorgeschlagen, den Rohrverbinder so auszubilden, dass das Rastmittel eine bzw. die Drehachse aufweist, die im wesentlichen zwischen einem bzw. dem Druckpunkt zum Lösen einer Verrastung und einem bzw. dem Rastabschnitt angeordnet ist.

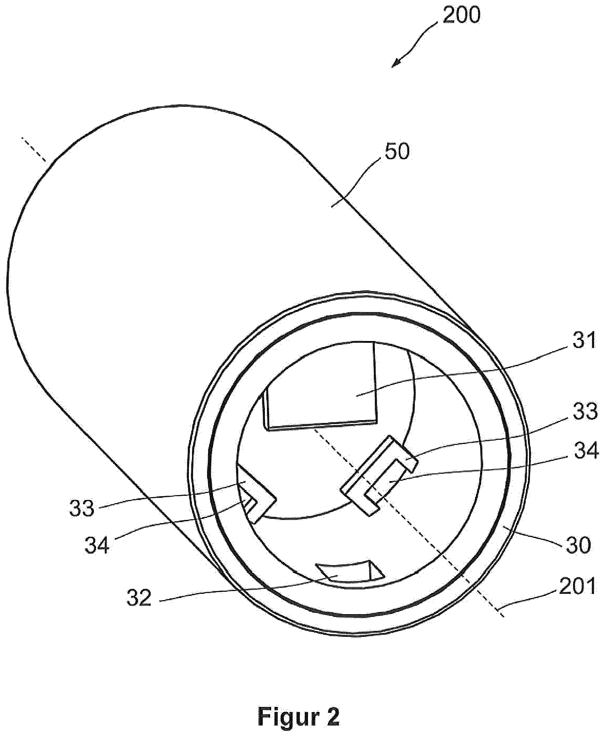

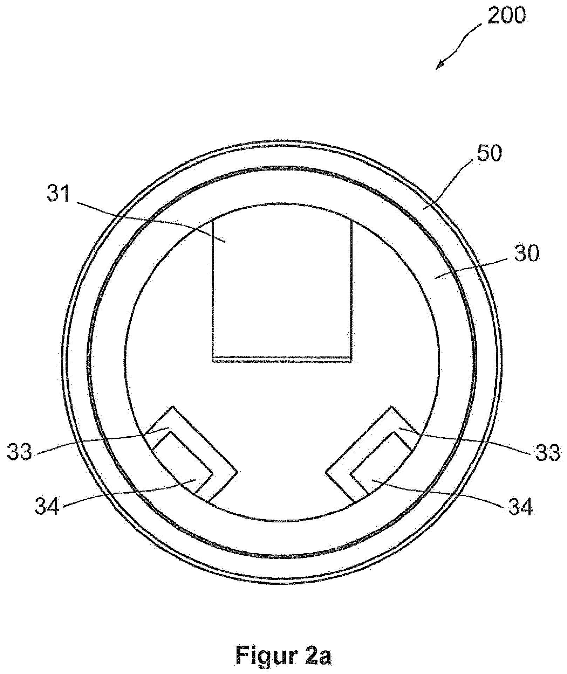

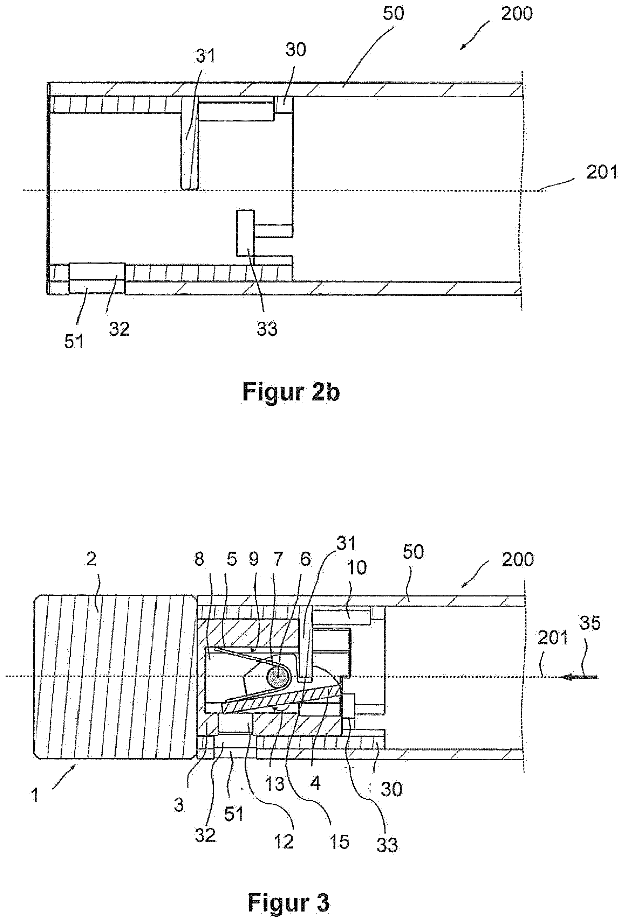

Figur 2 zeigt ein Ausführungsbeispiel eines Möbelrohrs 200. Das Möbelrohr 200 weist ein Außenrohr 50 auf und ein Innenrohr 30 als Ausführungsbeispiel eines Rohrabschnitts. Das Innenrohr 30 ist mit dem Außenrohr 50 verbunden und erstreckt sich lediglich in einem Teilabschnitt des Außenrohres 50 bezogen auf die Längsachse 201 und ist entsprechend deutlich kürzer als das Außenrohr 50. Das Außenrohr 50 kann an einer zweiten Seite, die hier nicht dargestellt ist, ein weiteres Innenrohr 30 aufweisen.

Das Innenrohr 30 weist einen sich radial nach innen erstreckenden Schenkel 31 als Ausführungsbeispiel eines Gegenelementes sowie zwei sich ebenfalls radial nach innen erstreckende Anschläge 33 auf. Die Anschläge 33 weisen jeweils eine Ausbuchtung 34 auf, welche zum Festlegen des Möbelrohres 200 an einem Gegenstück wie bspw. dem Rohrverbinder gemäß Figur 1 verwendet werden. Dadurch wird bei einer Verrastung mit einem Rohrverbinder eine Drehbewegung des Möbelrohres 200 um die Längsachse 201 verhindert. Weiterhin weist das Innenrohr 30 eine Öffnung 32 zum Einführen eines Werkzeugs ins Rohrinnere auf.

Figur 2a zeigt das Möbelrohr 200 aus Figur 2 in einer axialen Ansicht.

Figur 2b zeigt das Möbelrohr 200 aus Figur 2 in einer Schnittansicht. Das Innenrohr 30 und das Außenrohr 50 weisen jeweils eine Öffnung 32 bzw. 51 auf, welche direkt übereinander liegen. Dadurch ist ein Einführen eines Werkzeuges in das Innere des Möbelrohres (200) zum Trennen einer hergestellten Verbindung möglich.

Figur 3 zeigt den Knotenverbinder 1 aus Figur 1 mit einem Möbelrohr 200 aus Figur 2, welche miteinander verbunden sind, in einer Schnittansicht. Das Möbelrohr 200 setzt sich demnach aus einem Außenrohr 50 und einem Innenrohr 30 zusammen, wobei weitere Elemente vorgesehen sein können, auf die es hier nicht ankommt. Die Verbindung zwischen dem Möbelrohr 200 und dem Knotenverbinder 1 wird über das Innenrohr 30 und den Verbindungsstumpf 3 hergestellt. Dabei wird das Möbelrohr 200 auf den Verbindungsstumpf 3 in Einschubrichtung 35 aufgeschoben. Dadurch drückt der Schenkel 31 auf das Rastelement 4. Unter dieser Belastung wird das Rastelement 4 um die Drehachse 6 so bewegt, dass das Federelement 5 zusammengedrückt wird. Erreicht der Schenkel 31 den Rastabschnitt 15 des Rastelementes 4, entspannt sich das Federelement 5 teilweise, bewegt sich zumindest in eine Entspannungsrichtung und das Rastelement 4 bewegt sich zurück. Der Schenkel 31 befindet sich dann in einer Rastposition in dem Rastabschnitt 15. Der Rastabschnitt 15 hindert eine Bewegung des Schenkels entgegen der Einschubrichtung 35 und z.T. auch 31 in Einschubrichtung 35. Der Anschlag 33 liegt direkt an dem Verbindungsstumpf 3 an, so dass hierdurch zusätzlich eine Drehbewegung des Möbelrohres 200 um die Längsachse 201 verhindert wird. Um die Verbindung zu lösen, wird das Rastelement so weit um die Drehachse 6 bewegt, dass der Schenkel 31 nicht mehr in dem Rastabschnitt 15 liegt und somit von dem Verbindungsstumpf 3 entgegen der Einschubrichtung 35 entfernt werden kann. Diese Bewegung des Rastelementes 4 kann bspw. über ein Werkzeug erfolgen, das durch die Aussparungen 12, 32 und 51 in den Hohlraum 8 eingeschoben wird und dadurch an das Rastelement 4 anstößt und dieses um seine Drehachse 6 etwas dreht.

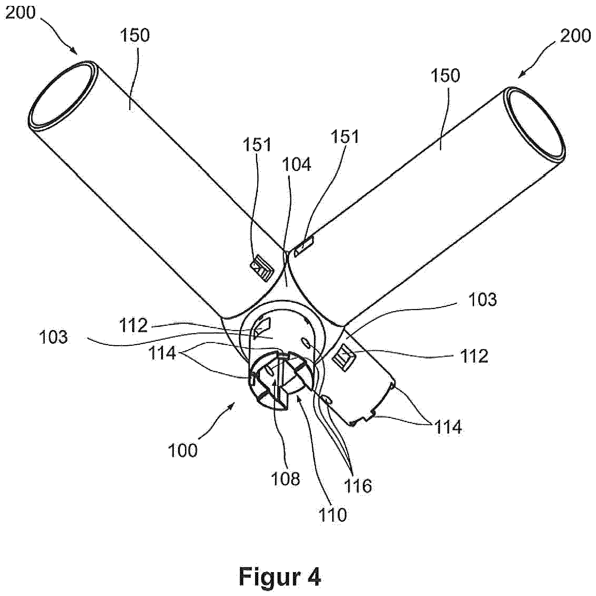

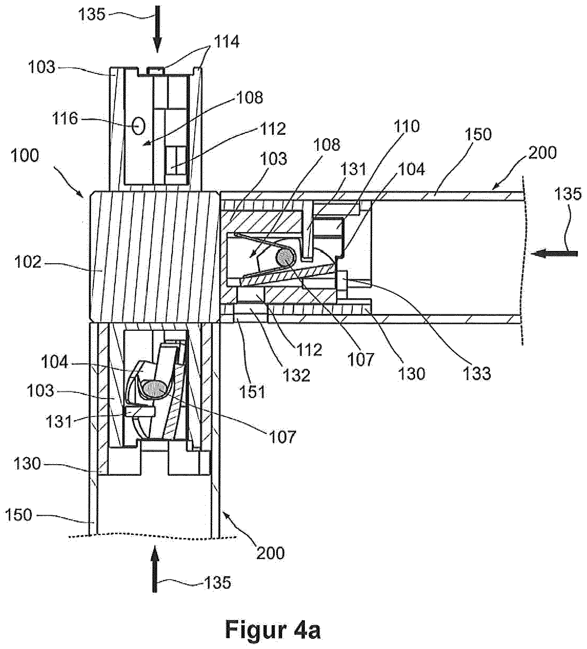

Figur 4 zeigt eine weitere Ausführungsform eines Rohrverbinders 100 mit vier Verbindungsstümpfen 103 sowie zwei aufgesteckte Möbelrohre 200. Dabei sind zwei der Verbindungsstümpfe 103 in dieser Ansicht durch die zwei aufgesteckten Möbelrohre 200 nicht zu erkennen. Die Verbindungsbereiche 103 gehen von einer Knotenbasis 104 in verschieden Richtungen ab. Dabei sind die benachbarten Verbindungsstümpfe 103 jeweils in einem Winkel von 90° zueinander angeordnet. Zwei der Verbindungsstümpfe 103 sind noch nicht mit einem Rohr verbunden. Diese weisen Bohrungen 116 auf, in die ein Lagerelement zum Lagern eines Federelementes und eines Rastelementes eingebracht werden kann.

Figur 4a zeigt den Rohrverbinder 100 in einer Schnittansicht. Es sind drei Verbindungsstümpfe 103 zu erkennen, die von einer Knotenbasis 102 abgehen. Auf einem der Verbindungsstümpfe 103 ist noch kein Rohr aufgesteckt. Es sind ein Bohrungsloch 116, eine Öffnung 112 sowie ein Hohlraum 108, in dem ein Rastelement, ein Federelement sowie ein Bolzen oder ähnliches Platz finden kann, zu erkennen. Die beiden anderen Verbindungsstümpfe 103 sind jeweils mit einem Möbelrohr 200 verbunden bzw. miteinander verrastet. Dabei liegt der Anschlag 133 des jeweiligen Innenrohres 130 an dem entsprechenden Verbindungsstumpf 103 an und der Schenkel 131 des jeweiligen Innenrohres 130 befindet sich in Rastposition. Ein solcher Rohrverbinder 100 kann beispielsweise in einem Möbel wie einem Regal als Rahmengerüst Anwendung finden.

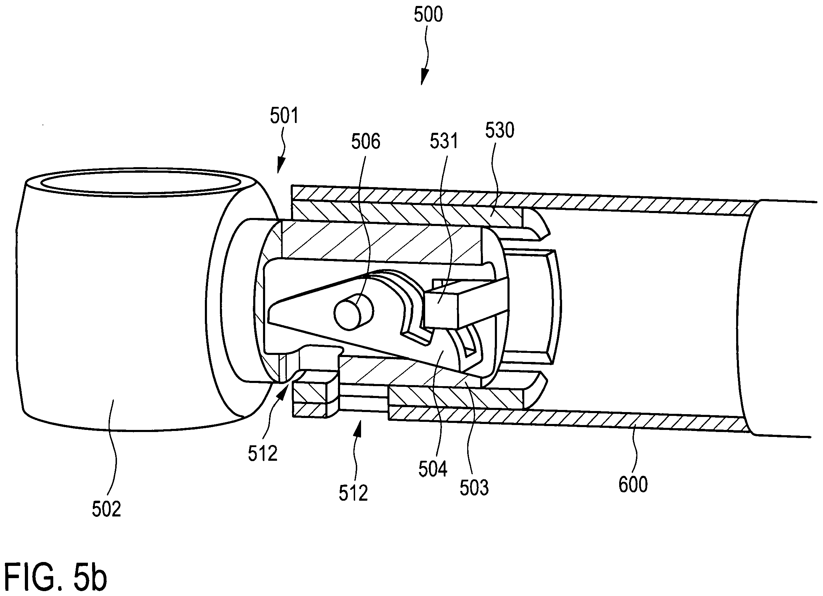

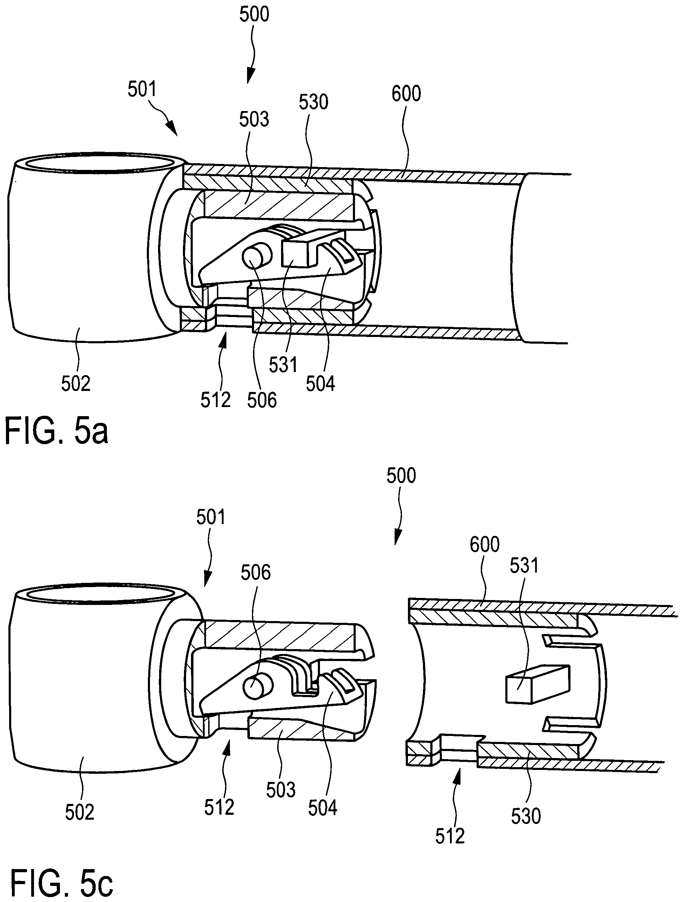

Figuren 5a, 5b und 5c zeigen einen Rohrverbindersatz 500 einer Ausführungsform in unterschiedlichen Positionen, nämlich zusammengesetzt in Figur 5a, getrennt in Figur 5c und dazwischen in Figur 5b. Die Figuren unterscheiden sich in Perspektive und Größe, also Maßstab, zeigen aber dieselbe Ausführungsform. Allen drei Figuren ist auch gemeinsam, dass sie eine teilweise geschnittene Darstellung zeigen.

Gemäß Figur 5a ist der Verbindungsstumpf 503 der Knotenbasis 502 mit dem Rohrabschnitt 530 verbunden. Der Rohrabschnitt 530 ist dabei fest in ein Möbelrohr 600 eingesetzt, z.B. verpresst, durch eine Presspassung fest verbunden und/oder verklebt, um nur einige Beispiele zu nennen. Eine Verbindung zwischen dem Rohrabschnitt 530 und dem Verbindungsstumpf 503 besteht durch eine Verrastung zwischen dem Rastelement 504 und dem Gegenelement 531, das hier als Strebe bzw. Stift ausgebildet ist.

Das Rastelement ist hierbei über seine Drehachse, nämlich Drehstift 506, fest, aber drehbar, mit dem Verbindungsstumpf verbunden. Ein Verkippen des Rohrabschnitts 530 gegenüber dem Verbindungsstumpf 503 wird durch eine entsprechende Passung dieser beiden Elemente zu einander erreicht.

Das Gegenelement 531, nämlich Strebe bzw. Stift, ist an zwei Seiten des Rohrabschnitts 530 befestigt, wobei wegen der gewählten Schnittdarstellung dieser 3 Figuren nur eine der beiden Seiten, nämlich gemäß der Darstellung die hintere Seite gezeigt ist. Das Gegenelement 531 ist in beiden Seiten jeweils in einer "Bohrung", bzw. Loch eingesetzt. Dadurch werden Zugbeanspruchungen zwischen Rastelement 504 und Gegenelement 531 gut von dem Gegenelement 531 auf den Rohrabschnitt 530 übertragen, ohne dass Kippkräfte aufgenommen werden müssen. Das Gleiche gilt auch für den Drehstift 506, der die Zugkräfte auf den Verbindungsstumpf weiterleitet, ohne dass Kippkräfte auftreten, weil auch der Drehstift 506 an zwei Seiten in dem Verbindungsstumpf verankert ist. Dabei sind das Gegenelement 531, insbesondere Stift 531 und der Drehstift 506 zu einander parallel angeordnet. Das Rastelement 504 kann somit eine gut auf das Gegenelement 531 abgestimmte Drehbewegung bzw. Schwenkbewegung ausführen.

Zum Lösen der in Figur 5a gezeigten Verbindung zwischen Rohrabschnitt 530 und Verbindungsstumpf 503, und damit zum Lösen einer Verbindung zwischen dem Gegenelement 531 und dem Rastelement 504 kann das Rastelement 504 durch eine Öffnung 512 hochgedrückt werden. Dadurch wird eine Schwenkbewegung bzw. Drehbewegung des Rastelementes 504 durchgeführt, bei der sich das Rastelement 504 im Bereich der Verrastung mit dem Gegenelement 531 nach unten bewegt und dadurch das Gegenelement 531 freigibt. Das Möbelrohr 600 kann dann von dem Rohrverbinder 501 abgezogen werden. Das Hochdrücken und die resultierende Bewegung nach unten hängt zwar von der Betrachtung ab, in vielen Fällen wird der Rohrverbindersatz aber so wie in den Figuren 5a, - 5c gezeigt angeordnet sein.

Zum Zusammensetzen kann der Rohrabschnitt 530 einfach auf den Verbindungsstumpf 503 aufgeschoben werden, wobei zunächst das Rastelement 504 durch das Gegenelement heruntergedrückt wird. Das ist in Figur 5b gezeigt.

Figur 5c lässt in dem gezeigten getrennten Zustand von Rohrabschnitt 530 und Verbindungsstumpf 503 das Gegenelement 531 gut erkennen.

## Patentansprüche

1. Rohrverbinder (1, 100) zum Verbinden von Möbelrohren (200), umfassend:
- eine Knotenbasis (2, 102), welche zwischen den Möbelrohren (200) anzuordnen ist,
- wenigstens einen mit der Knotenbasis fest verbundenen Verbindungsstumpf (3, 103) vorbereitet zum Aufstecken eines Rohrabschnittes (30, 130) von jeweils einem der Möbelrohre (200) darauf, wobei jeder der Verbindungsstümpfe (3, 103)
- wenigstens ein Rastelement (4, 104) zum Herstellen einer verrasteten Verbindung mit einem Gegenelement (31, 131) des jeweiligen Rohrabschnittes (30, 130) aufweist, und
- das Rastelement (4, 104) in eine Position zum Verrasten elastisch vorgespannt ist,
wobei jeder Rohrabschnitt (30, 130) wenigstens ein sich nach innen erstreckendes Gegenelement (31, 131) zum Verrasten mit dem Rastelement (4, 104) aufweist, **gekennzeichnet dadurch, dass** das Rastelement (4, 104) drehbar um eine Drehachse (6) angeordnet ist und/oder wenigstens ein Federelement (5, 105) zum Erzeugen der Vorspannung an dem Rastelement (4, 104) vorgesehen ist.

2. Rohrverbinder (1, 100) nach Anspruch 1, **dadurch gekennzeichnet, dass** der Verbindungsstumpf (3, 103) eine Aussparung (10, 110) vorbereitet zum Einführen des Gegenelementes (31, 131) beim Aufstecken des Rohrabschnittes auf den Verbindungsstumpf (3, 103) aufweist, sodass das Gegenelement (31, 131) durch die Aussparung (10, 110) in den Verbindungsstumpf (3, 103) in einer zur Längsachse (16) axialen Einschubrichtung (35, 135) geführt wird.

3. Rohrverbinder (1, 100) nach einem der vorstehenden Ansprüche, **gekennzeichnet durch** wenigstens zwei, vorzugsweise drei, vier, fünf oder sechs Verbindungsstümpfe (3, 103), wobei jeweils wenigstens zwei der Verbindungsstümpfe (3, 103) in einem Winkel von 45° bis 180°, vorzugsweise 90°, zueinander angeordnet sind, um jeweils zwei Möbelrohre (200) miteinander zu verbinden.

4. Rohrverbinder (1, 100) nach einem der Ansprüche 2 bis 4, **gekennzeichnet durch** eine Öffnung (12, 32, 51, 112, 151) zum Einführen eines Werkzeuges zum Drücken des Rastelementes (4, 104) gegen seine Vorspannung zum Schwenken um eine bzw. seine Drehachse (6) und/oder **dadurch gekennzeichnet, dass** das Rastelement (4) um eine bzw. die Drehachse drehbar angeordnet ist, die im wesentlichen zwischen einem Druckpunkt (21) zum Lösen einer Verrastung und einem Rastabschnitt zum Zurückhalten des Gegenelementes und Interagieren damit angeordnet ist.

5. Rohrverbinder, nach einem der vorstehenden Ansprüche, **dadurch gekennzeichnet, dass** das Rastelement in dem Rohrabschnitt und das Gegenelement in dem Verbindungsstumpf angeordnet ist.

6. Rohrverbindersatz (500) umfassend:
- einen Rohrverbinder (1, 100) nach einem der Ansprüche 1-5 und
- einen Rohrabschnitt (30, 130) zum Aufstecken von jeweils einem der Möbelrohre (200) auf den Rohrverbinder (1, 100),
wobei jeder Rohrabschnitt (30, 130) wenigstens ein sich nach innen erstreckendes Gegenelement (31, 131) zum Verrasten mit dem Rastelement (4, 104) aufweist.

7. Rohrverbindersatz nach Anspruch 6, **dadurch gekennzeichnet, dass** das Gegenelement (531) als Strebe oder Stift ausgebildet ist und vollständig durch den Rohrabschnitt (530), insbesondere quer zu einer Längsachse (16) des Rohrabschnitts (530), hindurch ragt, insbesondere dass
- das Gegenelement (531) an zwei Seiten des Rohrabschnitts (530) in diesen eingesetzt ist,
- dass das Gegenelement (531) durch den Rohrabschnitt (530) als Durchmesser hindurch ragt und/oder
- das Gegenelement (531) im zusammengesetzten Zustand der Knotenbasis mit dem Rohrabschnitt parallel zur Drehachse (6) des Rastelementes angeordnet ist.

8. Möbelrohr (200) zur Herstellung eines Rahmengerüstes eines Möbels, umfassend:
- wenigstens einen Rohrabschnitt (30, 130), welcher wenigstens ein sich nach innen erstreckendes Gegenelement (31, 131) zum Verrasten mit dem Rastelement (4, 104) aufweist, vorbereitet zum Verbinden mit einem Rohrverbinder (1, 100) nach einem der Ansprüche 1 bis 5.

9. Möbelrohr (200) nach Anspruch 8, **gekennzeichnet durch** ein Außenrohr (50, 150), in das der wenigstens eine Rohrabschnitt (30, 130) als ein Innenrohr eingesetzt ist.

10. Möbelrohr (200) nach einem der Ansprüche 8 oder 9, **dadurch gekennzeichnet, dass** das Gegenelement (31, 131) als ein aus dem Innenrohr (30, 130), teilweise ausgestanzter und umgebogener Schenkel ausgebildet ist.

11. Möbel, umfassend:
- wenigstens zwei Möbelrohre (200), insbesondere nach einem der Ansprüche 8 bis 10 und
- wenigstens einen Rohrverbinder (1, 100) nach einem der Ansprüche 1 bis 5, und/oder
- einen Rohrverbindersatz nach Anspruch 6 oder 7,
wobei die wenigsten zwei Möbelrohre (200) mit dem wenigstens einem Rohrverbinder (1, 100) verbunden sind.

12. Möbel nach Anspruch 11, **dadurch gekennzeichnet, dass** in dem Außenrohr (50, 150), in dem Innenrohr (30, 130) und in dem Verbindungsstumpf (3, 103) jeweils eine Öffnung (12, 32, 112, 132, 151) zum Einführen eines Werkzeuges zum Drücken des Rastelementes (4, 104) gegen seine Vorspannung zum Schwenken um eine bzw. seine Drehachse (6), angeordnet ist, wobei die jeweiligen Aussparungen (12, 32, 112, 132, 151) fluchtend zueinander angeordnet sind.

13. Verfahren zum Herstellen einer Verbindung wenigstens zweier Möbelrohre (200) nach einem der Ansprüche 8 bis 10 mit einem Rohrverbinder (1, 100) nach einem der Ansprüche 1 bis 5, und/oder eines Rohrverbindersatzes nach Anspruch 6 oder 7, umfassend den Schritt:
- Aufstecken des Rohrabschnitts (30, 130) auf den Verbindungsstumpf (3, 103),
sodass das Gegenelement (31, 131) mit dem Rastelement (4, 104) so ineinandergreift, dass eine verrastete Verbindung entsteht.

14. Verfahren nach Anspruch 13, **dadurch gekennzeichnet, dass** die Verbindung zwischen dem Rohrabschnitt (30, 130) und dem Verbindungsstumpf (3, 103) werkzeuglos hergestellt wird.

15. Verfahren zum Trennen einer Verbindung wenigstens zweier Möbelrohre (200) nach einem der Ansprüche 8 bis 10, welche mit einem Rohrverbinder (1, 100) nach einem der Ansprüche 1 bis 5 verbunden sind, und/oder eines Rohrverbindersatzes nach Anspruch 6 oder 7, umfassend den Schritt:
- Einführen eines Werkzeuges in die Öffnung des Außenrohres (50, 150), des Innenrohres (50, 150) und des Verbindungsstumpfes (3, 103),
so dass das Rastelement (4, 104) gegen seine Vorspannung um eine bzw. seine Drehachse (6) gedrückt, insbesondere geschwenkt wird.

## Claims

1. Pipe connector (1, 100) for connecting furniture pipes (200), comprising:
- a node base (2, 102) which is to be arranged between the furniture pipes (200),
- at least one connecting stub (3, 103) which is securely connected to the node base and which is designed for attachment of a pipe section (30, 130) of in each case one of the furniture pipes (200), wherein each of the connecting stubs (3, 103)
- has at least one latching element (4, 104) for establishing a latched connection to a counter-element (31, 131) of the respective pipe section (30, 130), and
- the latching element (4, 104) is elastically biased into a position for latching,
wherein each pipe section (30, 130) has at least one inwardly extending counter-element (31, 131) for latching with the latching element (4, 104), **characterized in that** the latching element (4, 104) is arranged such as to be able to rotate about an axis of rotation (6) and/or at least one spring element (5, 105) is provided for biasing the latching element (4, 104).

2. Pipe connector (1, 100) according to claim 1, **characterized in that** the connecting stub (3, 103) has a cutout (10, 110) designed for insertion of the counter-element (31, 131) when the pipe section is attached to the connecting stub (3, 103), so that the counter-element (31, 131) is guided by the cutout (10, 110) in the connecting stub (3, 103) in an insertion direction (35, 135) that is axial to the longitudinal axis (16).

3. Pipe connector (1, 100) according to one of the preceding claims, **characterized by** at least two, preferably three, four, five or six connecting stubs (3, 103), wherein in each case at least two of the connecting stubs (3, 103) are arranged at an angle of 45° to 180°, preferably 90°, to one another in order to connect in each case two furniture pipes (200) to one another.

4. Pipe connector (1, 100) according to one of claims 2 to 4, **characterized by** an opening (12, 32, 51, 112, 151) for inserting a tool for pressing the latching element (4, 104) against its bias in order to pivot the latter about an or its axis of rotation (6), and/or **characterized in that** the latching element (4) is arranged such as to be able to rotate about an or the axis of rotation which is arranged substantially between a pressing point (21) for releasing a latching and a latching section for retaining the counter-element and interacting with the latter.

5. Pipe connector according to one of the preceding claims, **characterized in that** the latching element is arranged in the pipe section and the counter-element is arranged in the connecting stub.

6. Pipe connector set (500), comprising:
- a pipe connector (1, 100) according to one of claims 1-5, and
- a pipe section (30, 130) for attaching in each case one of the furniture pipes (200) to the pipe connector (1, 100),
wherein each pipe section (30, 130) has at least one inwardly extending counter-element (31, 131) for latching with the latching element (4, 104).

7. Pipe connector set according to claim 6, **characterized in that** the counter-element (531) is designed as a strut or pin and protrudes fully through the pipe section (530), in particular transversely to a longitudinal axis (16) of the pipe section (530), in particular **in that**
- the counter-element (531) is inserted in the pipe section (530) on two sides thereof,
- the counter-element (531) protrudes through the pipe section (530) as a diameter, and/or
- the counter-element (531) is arranged parallel to the axis of rotation (6) of the latching element when the node base is assembled to the pipe section.

8. Furniture pipe (200) for producing a framework of an item of furniture, comprising:
- at least one pipe section (30, 130) which has at least one inwardly extending counter-element (31, 131) for latching with the latching element (4, 104), designed for connection to a pipe connector (1, 100) according to one of claims 1 to 5.

9. Furniture pipe (200) according to claim 8, **characterized by** an outer pipe (50, 150), in which the at least one pipe section (30, 130) is inserted as an inner pipe.

10. Furniture pipe (200) according to one of claims 8 or 9, **characterized in that** the counter-element (31, 131) is designed as a leg which is partially punched out and bent over from the inner pipe (30, 130).

11. Item of furniture, comprising:
- at least two furniture pipes (200), in particular according to one of claims 8 to 10, and
- at least one pipe connector (1, 100) according to one of claims 1 to 5, and/or
- a pipe connector set according to claim 6 or 7,
wherein the at least two furniture pipes (200) are connected to the at least one pipe connector (1, 100).

12. Item of furniture according to claim 11, **characterized in that** an opening (12, 32, 112, 132, 151) for inserting a tool for pressing the latching element (4, 104) against its bias in order to pivot the latter about an or its axis of rotation (6) is arranged in the outer pipe (50, 150), in the inner pipe (30, 130) and in the connecting stub (3, 103), the respective cutouts (12, 32, 112, 132, 151) being arranged in alignment with one another.

13. Method for establishing a connection of at least two furniture pipes (200) according to one of claims 8 to 10 to a pipe connector (1, 100) according to one of claims 1 to 5 and/or to a pipe connector set according to claim 6 or 7, comprising the step:
- attaching the pipe section (30, 130) to the connecting stub (3, 103),
so that the counter-element (31, 131) engages with the latching element (4, 104) in such a way that a latched connection is obtained.

14. Method according to claim 13, **characterized in that** the connection between the pipe section (30, 130) and the connecting stub (3, 103) is established without using any tool.

15. Method for separating a connection of at least two furniture pipes (200) according to one of claims 8 to 10 which are connected to a pipe connector (1, 100) according to one of claims 1 to 5 and/or a pipe connector set according to claim 6 or 7, comprising the step:
- inserting a tool into the opening of the outer pipe (50, 150), of the inner pipe (50, 150) and of the connecting stub (3, 103),
so that the latching element (4, 104) is pressed against its bias, in particular pivoted, about an or its axis of rotation (6).

## Revendications

1. Raccordement de tuyau (1, 100) pour le raccordement de tuyaux de meuble (200), comprenant :
- une base de noeud (2, 102) qui est à agencer entre les tuyaux de meuble (200),
- au moins un moignon de raccordement (3, 103) raccordé fixement à la base de noeud préparé pour l'enfichage d'une section de tuyau (30, 130) de respectivement un des tuyaux de meuble (200) dessus, dans lequel chacun des moignons de raccordement (3, 103)
- présente au moins un élément d'encliquetage (4, 104) pour la fabrication d'un raccordement encliqueté avec un élément antagoniste (31, 131) de la section de tuyau respective (30, 130), et
- l'élément d'encliquetage (4, 104) est élastiquement précontraint dans une position pour l'encliquetage,
dans lequel chaque section de tuyau (30, 130) présente au moins un élément antagoniste (31 ; 131) s'étendant vers l'intérieur pour l'encliquetage avec l'élément d'encliquetage (4, 104), **caractérisé en ce que**
l'élément d'encliquetage (4, 104) est agencé de manière rotative autour d'un axe de rotation (6) et/ou au moins un élément de ressort (5, 105) est prévu pour la génération de la précontrainte sur l'élément d'encliquetage (4, 104).

2. Raccordement de tuyau (1, 100) selon la revendication 1, **caractérisé en ce que** le moignon de raccordement (3, 103) présente un évidement (10, 110) préparé pour l'introduction de l'élément antagoniste (31, 131) lors de l'enfichage de la section de tuyau sur le moignon de raccordement (3, 103) de sorte que l'élément antagoniste (31, 131) soit guidé par l'évidement (10, 110) dans le moignon de raccordement (3, 103) dans un sens d'enfoncement (35, 135) axial à l'axe longitudinal (16).

3. Raccordement de tuyau (1, 100) selon l'une quelconque des revendications précédentes, **caractérisé par** au moins deux, de préférence trois, quatre, cinq ou six moignons de raccordement (3, 103), dans lequel respectivement au moins deux des moignons de raccordement (3, 103) sont agencés dans un angle de 45° à 180°, de préférence de 90°, l'un par rapport à l'autre, afin de raccorder entre eux respectivement deux tuyaux de meuble (200).

4. Raccordement de tuyau (1, 100) selon l'une quelconque des revendications 2 à 4, **caractérisé par** une ouverture (12, 32, 51, 112, 151) pour l'introduction d'un outil pour le pressage de l'élément d'encliquetage (4, 104) contre sa précontrainte pour le pivotement autour d'un ou de son axe de rotation (6) et/ou **caractérisé en ce que** l'élément d'encliquetage (4) est agencé de manière rotative autour d'un ou de l'axe de rotation qui est agencé sensiblement entre un point de pression (21) pour le détachement d'un encliquetage et une section d'encliquetage pour la retenue de l'élément antagoniste et l'interaction avec celui-ci.

5. Raccordement de tuyau selon l'une quelconque des revendications précédentes, **caractérisé en ce que** l'élément d'encliquetage est agencé dans la section de tuyau et l'élément antagoniste est agencé dans le moignon de raccordement.

6. Jeu de raccordement de tuyau (500) comprenant :
- un raccordement de tuyau (1, 100) selon l'une quelconque des revendications 1 à 5, et
- une section de tuyau (30, 130) pour l'enfichage de respectivement un des tuyaux de meuble (200) sur le raccordement de tuyau (1, 100),
dans lequel chaque section de tuyau (30, 130) présente au moins un élément antagoniste (31, 131) s'étendant vers l'intérieur pour l'encliquetage avec l'élément d'encliquetage (4, 104).

7. Jeu de raccordement de tuyau selon la revendication 6, **caractérisé en ce que** l'élément antagoniste (531) est réalisé comme entretoise ou tige et pénètre complètement au travers de la section de tuyau (530), en particulier transversalement à un axe longitudinal (16) de la section de tuyau (530), en particulier **en ce que**
- l'élément antagoniste (531) est inséré sur deux côtés de la section de tuyau (530) dans celle-ci,
- l'élément antagoniste (531) pénètre au travers de la section de tuyau (530) comme diamètre et/ou
- l'élément antagoniste (531) est agencé dans l'état composé de la base de noeud avec la section de tuyau parallèlement à l'axe de rotation (6) de l'élément d'encliquetage.

8. Tuyau de meuble (200) destiné à la fabrication d'une ossature cadre d'un meuble, comprenant :
- au moins une section de tuyau (30, 130) qui présente au moins un élément antagoniste (31, 131) s'étendant vers l'intérieur pour l'encliquetage avec l'élément d'encliquetage (4, 104), préparé pour le raccordement avec un raccordement de tuyau (1, 100) selon l'une quelconque des revendications 1 à 5.

9. Tuyau de meuble (200) selon la revendication 8, **caractérisé par** un tuyau extérieur (50, 150), dans lequel l'au moins une section de tuyau (30, 130) est insérée comme un tuyau intérieur.

10. Tuyau de meuble (200) selon l'une quelconque des revendications 8 ou 9, **caractérisé en ce que** l'élément antagoniste (31, 131) est réalisé comme une branche repliée et découpée à l'emporte-pièce partiellement à partir du tuyau intérieur (30, 130).

11. Meuble, comprenant :
- au moins deux tuyaux de meuble (200), en particulier selon l'une quelconque des revendications 8 à 10 et
- au moins un raccordement de tuyau (1, 100) selon l'une quelconque des revendications 1 à 5, et/ou
- un jeu de raccordement de tuyau selon la revendication 6 ou 7,
dans lequel les au moins deux tuyaux de meuble (200) sont raccordés à l'au moins un raccordement de tuyau (1, 100).

12. Meuble selon la revendication 11, **caractérisé en ce que**, dans le tuyau extérieur (50, 150), dans le tuyau intérieur (30, 130) et dans le moignon de raccordement (3, 103) respectivement, une ouverture (12, 32, 112, 132, 151) est agencée pour l'introduction d'un outil pour le pressage de l'élément d'encliquetage (4, 104) contre sa précontrainte pour le pivotement autour d'un ou de son axe de rotation (6), dans lequel les évidements respectifs (12, 32, 112, 132, 151) sont agencés par alignement les uns sur les autres.

13. Procédé de fabrication d'un raccordement au moins de deux tuyaux de meuble (200) selon l'une quelconque des revendications 8 à 10 avec un raccordement de tuyau (1, 100) selon l'une quelconque des revendications 1 à 5, et/ou d'un jeu de raccordement de tuyau selon la revendication 6 ou 7, comprenant l'étape :
- l'enfichage de la section de tuyau (30, 130) sur le moignon de raccordement (3, 103),
de sorte que l'élément antagoniste (31, 131) vienne en prise avec l'élément d'encliquetage (4, 104) l'un dans l'autre de sorte qu'un raccordement encliqueté apparaisse.

14. Procédé selon la revendication 13, **caractérisé en ce que** le raccordement est fabriqué sans outil entre la section de tuyau (30, 130) et le moignon de raccordement (3, 103).

15. Procédé de séparation d'un raccordement au moins de deux tuyaux de meuble (200) selon l'une quelconque des revendications 8 à 10 qui sont raccordés à un raccordement de tuyau (1, 100) selon l'une quelconque des revendications 1 à 5, et/ou d'un jeu de raccordement de tuyau selon la revendication 6 ou 7, comprenant l'étape :
- l'introduction d'un outil dans l'ouverture du tuyau extérieur (50, 150), du tuyau intérieur (50, 150) et du moignon de raccordement (3, 103),
de sorte que l'élément d'encliquetage (4, 104) soit pressé, contre sa précontrainte autour d'un ou de son axe de rotation (6), en particulier pivoté.
